# EUROPÄISCHE PATENTANMELDUNG

(11) **EP 1 768 062 A1**
(43) Veröffentlichungstag der Anmeldung: **28.03.2007**
(21) Anmeldenummer: 05020816.4
(22) Anmeldetag: 23.09.2005
(51) Int. Cl.: G06T 7/00, A61B 5/00

(54) **Segmentierung in Datensätzen aus medizintechnischen bildgebenden Verfahren**

(71) Anmelder: BrainLAB AG, 85551 Kirchheim/Heimstetten (DE)
(72) Erfinder: Blumhofer, Andreas, Dr., 85579 Neubiberg (DE)
(74) Vertreter: Schwabe - Sandmair - Marx

(57) **Zusammenfassung**

Die Erfindung betrifft die Segmentierung in einem Körperstruktur-Bilddatensatz, der mit einem medizintechnischen, bildgebenden Verfahren erstellt wurde, wobei
- ein dem Körperstruktur-Bilddatensatz zuordnungsfähiger Referenzdatensatz bereitgestellt wird;
- eine Gesamt-Abbildungsfunktion ermittelt wird, die den Referenzdatensatz im Wesentlichen auf den Körperstruktur-Bilddatensatz abbildet, und bei dem
- abgegrenzte Körperstrukturen mittels des abgebildeten Referenzdatensatzes im Körperstruktur-Datensatz definiert werden,

wobei die Gesamt-Abbildungsfunktion umfasst:
einen Anteil, der die Zerlegung der Körperstruktur in Strukturteile und deren Einzelneuanordnung umfasst, und
einen Anteil, der die globale Deformation bzw. Verschiebung der Körperstruktur umfasst.

## Beschreibung

Die vorliegende Erfindung betrifft die Segmentierung in Datensätzen aus medizintechnischen bildgebenden Verfahren.

In immer größerem Ausmaß nehmen Ärzte bildgebende Verfahren in Anspruch, die den Körper eines Patienten ganz oder teilweise erfassen. Diese Verfahren umfassen unter anderem die Computertomographie, die Kemspintomographie (MR), PET- und SPECT-Verfahren, sowie Röntgenverfahren. Die inneren Körperstrukturen, die durch das bildgebende Verfahren erfasst wurden, kann man sich computerunterstützt schnittbildartig oder auch als 3D-Rekonstruktion ausgeben lassen. Eine solche Bildausgabe unterstützt den Arzt erheblich bei seiner Analyse und Einordnung der einzelnen Strukturen im Inneren des Patientenkörpers.

Manchmal können aber einige der genannten Verfahren einzelne Strukturen nicht genau bzw. vollständig gegeneinander abgrenzen, insbesondere in den Fällen, wo zwei unterschiedliche Strukturen bei einem bildgebenden Verfahren denselben Kontrastwert bzw. Farbwert ergeben. Es ist dabei dann nicht immer möglich und außerdem sehr teuer, die Abgrenzung solcher Strukturen mittels eines weiteren bildgebenden Verfahrens durchzuführen, und deshalb hilft man sich hier mit Referenz-Atlanten, die für bestimmte Körperteile typische Formen innerer Strukturen umfassen, wie sie in bestimmten bildgebenden Verfahren erscheinen würden.

Hat man beispielsweise von einer gewissen Körperstruktur aus dem bildgebenden Verfahren schon einen Anteil ihrer Abgrenzung zu der Umgebung parat, einen anderen Anteil aber nicht, so lässt sich aus dem vorhandenen Anteil der Abgrenzung im Körperstruktur-Bilddatensatz eine Abbildungsfunktion ermitteln, welche die entsprechenden Teile eines Referenz-Datensatzes auf die tatsächlich vorhandenen Teile des Körperstruktur-Bilddatensatzes abbildet. Hat man dann diese Abbildungsfunktion zur Verfügung, so lassen sich mit dieser aus dem Referenz-Datensatz auch die Abgrenzungen bzw. die körperlichen Merkmale ermitteln, die dem Körperstruktur-Bilddatensatz nicht unmittelbar entnehmbar sind, und zwar einfach durch Anwendung der vorher erhaltenen Abbildungsfunktion.

Die EP 1 363 242 A1 beschreibt ein solches Verfahren, bei dem noch ein abgebildeter Referenz-Label-Datensatz zur Erzeugung eines individualisierten Label-Datensatzes durch Überlagerung mit dem Patientendatensatz verwendet wird.

Die bei derartigen Verfahren verwendeten Abbildungen umfassen globale elastische Deformationen, d.h. eine gesamte Körperstruktur, auch wenn sie aus einzelnen Teilen besteht, wird als Referenzdatensatz elastisch so deformiert, dass sie sich dem wirklichen Körperstruktur-Bilddatensatz anpasst. Die resultierende Übereinstimmung wird dann beispielsweise verwendet, um Strukturen im Körperstruktur-Bilddatensatz (Patient) abzugrenzen und visuell hervorzuheben. Dieser Vorgang wird auch als Segmentierung bezeichnet; weil Referenzdatensatz-Atlanten verwendet werden auch als "Atlas-Segmentierung". Diese Atlas-Segmentierung kann auch globale Verschiebungen der gesamten Struktur bei der Abbildung berücksichtigen.

Bei einigen Anwendungsfällen war ein solches Vorgehen, wie es oben beschrieben wurde, aber nicht erfolgreich, und zwar insbesondere bei Strukturen die mehrere separate Bestandteile aufwiesen. Die Segmentierung funktionierte nicht oder nur sehr unstabil.

Es ist die Aufgabe der vorliegenden Erfindung, die Segmentierung in einem Körperstruktur-Bilddatensatz, der mit einem medizintechnischen, bildgebenden Verfahren erstellt wurde, derart zu verbessern, dass sie in möglichst allen Anwendungsfällen stabil funktionieren kann.

Diese Aufgabe wird durch ein Verfahren gemäß dem Patentanspruch 1 und eine Vorrichtung gemäß dem Patentanspruch 11 gelöst. Die Unteransprüche definieren bevorzugte Ausführungsformen der Erfindung.

Beim erfindungsgemäßen Segmentierungsverfahren für einen Körperstruktur-Bilddatensatz (Patientendatensatz), der mit einem medizintechnischen, bildgebenden Verfahren erstellt wurde, werden die folgenden Schritte durchgeführt:
- ein dem Körperstruktur-Bilddatensatz zuordnungsfähiger Referenzdatensatz wird bereitgestellt;
- eine Gesamt-Abbildungsfunktion wird ermittelt, die den Referenzdatensatz im Wesentlichen auf den Körperstruktur-Bilddatensatz abbildet, und
- abgegrenzte Körperstrukturdaten werden mittels des abgebildeten Referenzdatensatzes im Körperstruktur-Datensatz definiert.
   Die Gesamt-Abbildungsfunktion umfasst dabei einen Anteil, der die Zerlegung der Körperstruktur in Strukturteile und deren Einzelneuanordnung umfasst, und einen Anteil, der die globale Deformation bzw. Verschiebung der Körperstruktur umfasst.

Mit anderen Worten basiert die Erfindung darauf, den Referenzdatensatz in mehrere unabhängig voneinander bewegbare Bereiche bzw. Teile zu separieren. Der Vorteil dieses erfindungsgemäßen Vorgehens besteht insbesondere darin, dass sich auch Körperstruktur-Bilddatensätze segmentieren lassen, die mit dem bisherigen Verfahren nicht verarbeitet werden konnten, weil ihre einzelnen Teile stark gegeneinander verdreht bzw. verschoben waren. Mit der Zerlegung der Körperstruktur in Strukturteile bietet die vorliegende Erfindung eine diskontinuierliche Deformation (Segmentierung) im Gegensatz zur reinen kontinuierlichen Deformation, wie sie bisher verwendet wurde. Man kann auch sagen, dass die Erfindung eine Lokalisation bzw. Segmentierung diskontinuierlich deformierter Strukturen gestattet.

Die genannte Einzelneuanordnung der Strukturteile kann eine Einzeldrehung von Strukturteilen relativ zueinander umfassen, aber auch eine Einzelverschiebung von Strukturteilen relativ zueinander. Sie kann auch beides umfassen.

Gemäß einer Ausführungsform der Erfindung wird der Gesamt-Abbildungsfunktions-Anteil mit der Zerlegung der Körperstruktur in Strukturteile und deren Einzelneuanordnung vor dem andern Gesamt-Abbildungsfunktions-Anteil ermittelt.

Bei einer anderen Ausführungsform der Erfindung werden beide Anteile der Gesamt-Abbildungsfunktion gemeinsam ermittelt, und es ist grundsätzlich auch denkbar, den globalen Deformations-Anteil vorab durchzuführen. Ebenfalls ist es im Grundsatz denkbar, dass die Ermittlung dieser Funktionsanteile immer abwechselnd auf die beiden unterschiedlichen Arten erfolgt, bis am Ende die Gesamt-Abbildungsfunktion ermittelt ist.

Durchaus denkbar ist es im Rahmen der vorliegenden Erfindung auch, einen der beiden Anteile der Gesamt-Abbildungsfunktion erst alleine zu verwenden und den anderen Anteil dann hinzu zu nehmen, wenn man feststellt, dass man mit einem einzigen Anteil nicht zu einem Ergebnis bzw. zu einem stabilen Ergebnis kommt. Ein solcher Fall wäre beispielsweise die Verwendung der globalen Deformation, dann die Feststellung, dass kein Ergebnis oder kein stabiles Ergebnis erzielt werden kann und dann die Verwendung der Einzelteil-Zerlegung und Neuanordnung der Teile.

Bei einer weiteren Ausführungsform der Erfindung wird der Gesamt-Abbildungsfunktions-Anteil mit der Zerlegung der Körperstruktur in Strukturteile und deren Einzelneuanordnung ("Einzel-Anteil") Randbedingungen berücksichtigen, die von der Anatomie der Körperstruktur und ihrem Verhältnis zu umgebenden Körperstrukturen vorgegeben werden. Beispielsweise ist es bei der Segmentierung des Femur-Knochens oder umgebender Strukturteile sehr von Vorteil, wenn man berücksichtigt, dass dieser Knochen sich lediglich in bestimmter Weise bewegen kann (Gelenkachsen). Es können hierdurch sehr stabile Segmentierungen erhalten werden. Die Randbedingungen können demnach erfindungsgemäß anatomisch mögliche Drehachsen bzw. Gelenkachsen oder anatomiekonforme Abstandsänderungen von Körperstrukturen oder Gruppen bzw. Teilen davon umfassen.

Ganz allgemein gesagt, eignet sich die erfindungsgemäße Segmentierung für alle Körperstrukturen, und insbesondere auch für Körperstruktur-Bilddatensätze, die Knochenstrukturen oder Gruppen bzw. Teile davon umfassen.

Die Erfindung richtet sich auch auf ein Programm, das, wenn es auf einem Computer läuft oder in einen Computer geladen ist, den Computer veranlasst, ein wie oben beschriebenes Verfahren durchzuführen, sowie auf ein Computerprogramm-Speichermedium, das ein solches Programm aufweist.

Die erfindungsgemäße Vorrichtung zum Segmentieren eines Körperstruktur-Bilddatensatzes, der mit einem medizintechnischen, bildgebenden Verfahren erstellt wurde, weist auf: eine Dateneingabevorrichtung zur Eingabe des Körperstruktur-Bilddatensatzes und eines zuordnungsfähigen Referenzdatensatzes; einen Speicher zum Speichern der Datensätze und eine Rechenvorrichtung, mittels der eine Gesamt-Abbildungsfunktion ermittelt wird, die den Referenzdatensatz im Wesentlichen auf dem Körperstruktur-Bilddatensatz abbildet, wobei abgegrenzte Körperstrukturen mittels des abgebildeten Referenzdatensatzes im Körperstruktur-Datensatz definiert werden, wobei die Gesamt-Abbildungsfunktion einen Anteil aufweist, der die Zerlegung der Körperstruktur in Strukturteile und deren Einzelneuanordnung umfasst, und einen Anteil, der die globale Deformation bzw. Verschiebung der Körperstruktur umfasst. Eine erfindungsgemäße Vorrichtung kann mit Mitteln zur Durchführung der oben näher erläuterten Verfahren ausgestattet sein, zum Beispiel mit computergestützten medizintechnischen Planungs- und Visualisierungssystemen.

Die Erfindung wird im Weiteren anhand eines Ausführungsbeispiels und unter Bezugnahme auf die beiliegenden Figuren näher erläutert. Sie kann alle hierin beschriebenen Merkmale und Aspekte einzeln sowie in jedweder Kombination umfassen. In der beiliegenden Zeichnung zeigen:
- Figur 1: ein Bild eines Körperstruktur-Bilddatensatzes (Patientendatensatz);
- Figur 2: ein dem Bild aus Figur 1 zuordnungsfähiges Bild aus einem Referenzdatensatz (Referenzatlas);
- Figur 3: ein Referenzdatensatz-Bild in dem Strukturteile abgegrenzt sind; und
- Figur 4: das Referenzdatensatz-Bild, der Figur 3 mit verschobenen/verdrehten Strukturteilen.

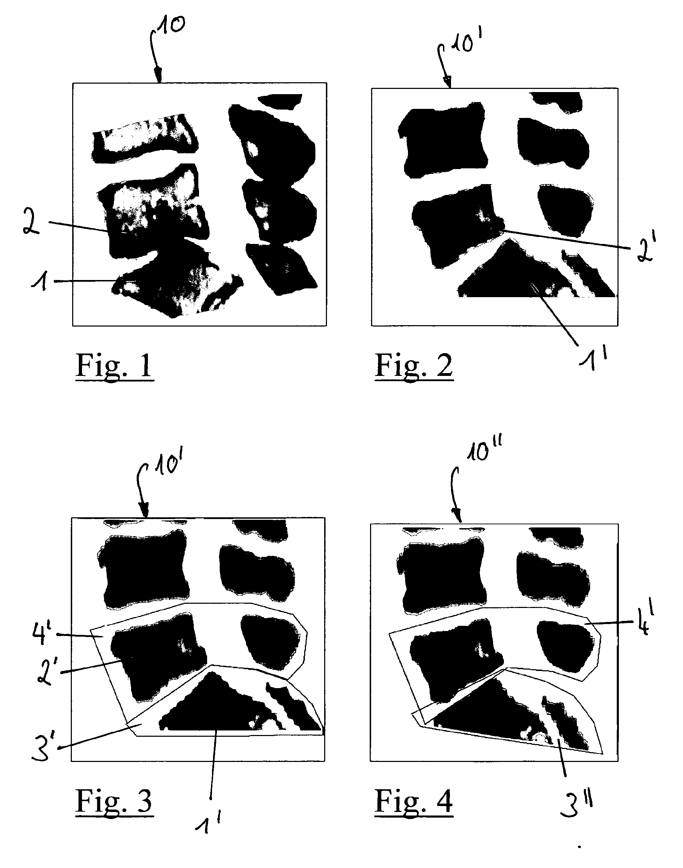

Die vorliegende Erfindung macht es möglich, eine Segmentierung in Fällen vorzunehmen, die bisher und mit herkömmlichen Mitteln diesem Verfahren nicht zugänglich waren. Ein Beispiel für einen solchen Fall ist in der Gegenüberstellung der Figuren 1 und 2 gezeigt, die jeweils Wirbelstrukturen zeigen. Die Figur 1 ist eine CT-Patientenaufnahme die eine Struktur mit mehreren Wirbeln zeigt. Bei diesem, tatsächlich am Patienten vorhandenen Zustand ist zum Beispiel der Wirbelkörper 1 gegenüber dem Wirbelkörper 2 stark verdreht und zu dem Wirbelkörper 2 hin verschoben. Diese Verdrehung bzw. Verschiebung wird gegenüber einem Zustand ermittelt, wie er in einem Referenzdatensatz (Figur 2) vorliegt; in diesem Atlas haben die Wirbelkörper 1', 2' einen größeren Abstand und sind nicht in diesem Maße zueinander verdreht.

Eine Abbildungsfunktion, die nur auf Deformation oder Verschiebung der gesamten Struktur 10' im Referenzatlas basiert, ist für einen solchen Fall nicht auffindbar, wenn am Ende der Zustand der Gesamtstruktur 10 mit der Anordnung der Wirbelkörper 1 und 2 erreicht werden soll. Die kontinuierliche Deformation gemäß dem Stand der Technik kann die Abstandsverringerung zwischen den beiden unteren Wirbelkörpern und die seitliche Falschausrichtung, also die hier vorhandene Verschiebung und Drehung nicht erreichen.

Hinzu kommt oft allgemein noch eine weitere Schwierigkeit, die mit Referenz-Atlanten zu tun hat, die für eine bestimmte Situation erzeugt werden. Die Mutationen sind nämlich nicht notwendigerweise pathologisch. Rotationen treten ganz natürlicherweise beispielsweise zwischen dem Oberschenkel und der Hüfte auf, weil das Bein nur in ganz seltenen Fällen beim Patienten-CT dieselbe Position haben wird wie im Referenzdatensatz (Atlas).

Sowohl in den erstgenannten pathologischen Fällen als auch in den nicht pathologischen Fällen greift aber die vorliegende Erfindung, und sie macht somit eine zuverlässige Segmentierung (oder auch Lokalisation) der Körperstrukturen möglich. Gemäß der Erfindung werden nämlich, wie in Figur 3 dargestellt ist, im Referenzdatensatz 10' Separierungen vorgenommen, d.h. der Referenzdatensatz wird unterteilt bzw. zerlegt in bekannte Bereiche, welche die problematischen Strukturen umgeben. In Figur 3 ist der Bereich 3' bzw. der Strukturteil 3' gezeigt, der den Wirbelkörper 1' enthält, und der hiervon verschiedene und abgegrenzte Strukturteil 4' mit dem Wirbelkörper 2'. Nunmehr wird es möglich, Strukturteile zu verschieben bzw. zu drehen, bis sie sich der Topologie des Patientendatensatzes 10 annähern bzw. angleichen.

Ein solches Bild, bei dem der Bereich 3' soweit gedreht bzw. verschoben wurde, dass er sogar mit dem Bereich 4' in Überlagerung kommt, ist in Figur 4 dargestellt. Die Lage des Strukturteils 3' ist nun in den Zustand 3" übergegangen, der dem Zustand der Figur 1 (Patienten-CT) schon sehr viel näher kommt. Die Segmentierung kann nun von diesem Zustand aus durch eine übliche Deformationsfunktion erzielt werden, und zwar stabil und in relativ kurzer Zeit.

Nachdem in dieser Weise die geeignete Gesamt-Abbildungsfunktion ermittelt worden ist, ist es für umgebende Strukturen bzw. Strukturteile relativ einfach, eine Segmentierung zu erzielen, weil die Abbildungsfunktion wieder verwendet werden kann. Dem Arzt kann deshalb in relativ kurzer Zeit eine segmentierte Darstellung bestimmter Körperstrukturen (Wirbel oder Wirbelgruppen aber auch Weichteile wie Hirnstamm) zur Verfügung gestellt werden.

Anzumerken bleibt noch, dass man ebenfalls daran denken könnte, einen einzelnen Referenzknochen zu verwenden, der an den Körperstruktur-Bilddatensatz anzupassen wäre. Zumindest die rein elastische Deformierung (elastische Fusion bzw. elastisches Matching) stößt hier auf Probleme, weil benachbarte Knochen in dem Referenzdatensatz keine entsprechenden Knochenteile aufweisen und das System ebenfalls versuchen würde, sie an den einzelnen Knochen anzupassen. Ferner ist noch darauf hinzuweisen, dass das Überlappen von einzelnen Strukturteilen (zum Beispiel Teil 3" und 4' in Figur 4) Regionen erzeugt, wo mehrere Information über ein Gebiet verfügbar sind, während andererseits Regionen vorhanden sind, über die keine Information vorliegt. Dies kann leicht dadurch gelöst werden, dass bei mehreren vorhandenen Informationen der Maximalwert verwendet wird und leere Regionen mit Null-Werten aufgefüllt werden. Auch ist noch darauf hinzuweisen, dass die Verwendung eines Referenz-Label-Datensatzes und dessen Abbildung auf einen individualisierten Label-Datensatz, wie sie in der EP 136 32 42 A1 beschrieben wird, auch im Rahmen der vorliegenden Erfindung eingesetzt werden kann.

Die Erfindung kann ihre spezielle Anwendung im Bereich der Segmentierung für CTbasierte Wirbelsäulen-, Hüften- und Knieapplikationen finden.

## Patentansprüche

1. Segmentierungsverfahren für einen Körperstruktur-Bilddatensatz, der mit einem medizintechnischen, bildgebenden Verfahren erstellt wurde, bei dem
- ein dem Körperstruktur-Bilddatensatz zuordnungsfähiger Referenzdatensatz bereitgestellt wird;
- eine Gesamt-Abbildungsfunktion ermittelt wird, die den Referenzdatensatz im wesentlichen auf den Körperstruktur-Bilddatensatz abbildet, und bei dem
- abgegrenzte Körperstrukturen mittels des abgebildeten Referenzdatensatzes im Körperstruktur-Datensatz definiert werden,
wobei die Gesamt-Abbildungsfunktion umfasst:
einen Anteil, der die Zerlegung der Körperstruktur in Strukturanteile und deren Einzelneuanordnung umfasst, und
einen Anteil, der die globale Deformation bzw. Verschiebung der Körperstruktur umfasst.

2. Segmentierungsverfahren nach Anspruch 1, bei dem die Einzelneuanordnung eine Einzeldrehung von Strukturanteilen relativ zueinander umfasst.

3. Segmentierungsverfahren nach Anspruch 1 oder 2, bei dem die Einzelneuanordnung eine Einzelverschiebung von Strukturanteilen relativ zueinander umfasst.

4. Segmentierungsverfahren nach einem der Ansprüche 1 bis 3, bei dem der Gesamt-Abbildungsfunktions-Anteil mit der Zerlegung der Körperstruktur in Strukturteile und deren Einzelneuanordnung vor dem anderen Gesamt-Abbildungsfunktions-Anteil ermittelt wird.

5. Segmentierungsverfahren nach einem der Ansprüche 1 bis 3, bei dem der Gesamt-Abbildungsfunktions-Anteil mit der Zerlegung der Körperstruktur in Strukturteile und deren Einzelneuanordnung gemeinsam mit dem anderen Gesamt-Abbildungsfunktions-Anteil ermittelt wird.

6. Segmentierungsverfahren nach einem der Ansprüche 1 bis 5, bei dem der Gesamt-Abbildungsfunktions-Anteil mit der Zerlegung der Körperstruktur in Strukturteile und deren Einzelneuanordnung Randbedingungen berücksichtigt, die von der Anatomie der Körperstruktur und ihrem Verhältnis zu umgebenden Körperstrukturen vorgegeben werden.

7. Segmentierungsverfahren nach Anspruch 6, bei dem die Randbedingungen anatomisch mögliche Drehachsen bzw. Gelenkachsen oder Abstandsänderungen von Körperstrukturen oder Gruppen bzw. Teilen davon umfassen.

8. Segmentierungsverfahren nach einem der Ansprüche 1 bis 7, bei dem der Körperstruktur-Bilddatensatz Knochenstrukturen oder Gruppen bzw. Teile davon umfasst.

9. Programm, das, wenn es auf einem Computer läuft oder in einem Computer geladen ist, den Computer veranlasst, ein Verfahren gemäß einem der Ansprüche 1 bis 8 durchzuführen.

10. Computerprogramm-Speichermedium, das ein Programm nach Anspruch 9 aufweist.

11. Vorrichtung zum Segmentieren eines Körperstruktur-Bilddatensatzes, der mit einem medizintechnischen, bildgebenden Verfahren erstellt wurde, mit einer Dateneingabevorrichtung zur Eingabe des Körperstruktur-Bilddatensatzes und eines zuordnungsfähigen Referenzdatensatzes; einem Speicher zum Speichern der Datensätze; und mit einer Rechenvorrichtung, mittels der eine Gesamt-Abbildungsfunktion ermittelt wird, die den Referenzdatensatz im wesentlichen auf den Körperstruktur-Bilddatensatz abbildet, wobei abgegrenzte Körperstrukturen mittels des abgebildeten Referenzdatensatzes im Körperstruktur-Datensatz definiert werden, wobei die Gesamt-Abbildungsfunktion einen Anteil aufweist, der die Zerlegung der Körperstruktur in Strukturteile und deren Einzelneuanordnung umfasst, und einen Anteil, der die globale Deformation bzw. Verschiebung der Körperstruktur umfasst.

12. Vorrichtung nach Anspruch 11, mit Mitteln zur Durchführung der Verfahren aus den Ansprüchen 2 bis 8.
